# EUROPÄISCHE PATENTSCHRIFT

(11) **EP 3 244 182 B1**
(45) Veröffentlichungstag und Bekanntmachung des Hinweises auf die Patenterteilung: **27.11.2019**
(21) Anmeldenummer: 16169605.9
(22) Anmeldetag: 13.05.2016
(51) Int. Cl.: B66F 1/00, F16L 55/30, F16L 55/34, G01M 3/00

(54) **VORTRIEBSEINRICHTUNG FÜR INSPEKTIONSSYSTEM**
PROPULSION DEVICE FOR INSPECTION SYSTEM
DISPOSITIF D'AVANCEE POUR SYSTEME D'INSPECTION

(43) Veröffentlichungstag der Anmeldung: 15.11.2017
(60) Teilanmeldung: 19157474.8
(73) Patentinhaber: iPEK International GmbH, 87477 Sulzberg (DE)
(72) Erfinder: Becherer, Andreas, 87448 Martinzell (DE); Zahnd, Fabian, 87437 Kempten (DE)
(74) Vertreter: 2s-ip Schramm Schneider Bertagnoll Patent- und Rechtsanwälte Part mbB

(56) Entgegenhaltungen:
- EP-A1- 0 598 986
- EP-A2- 0 083 759
- WO-A1-2016/062664
- FR-A1- 2 689 479
- GB-A- 2 255 814
- US-A- 4 085 808

## Beschreibung

### Gebiet der Erfindung

Die Erfindung betrifft eine Vortriebseinrichtung zum linearen Bewegen eines Schiebeaals eines Inspektionssystems, insbesondere Rohrinspektionssystem, in einem Rohr bzw. Kanal, das heißt zum Vorschub eines solchen Schiebeaals in einem Rohr bzw. Kanal.

### Hintergrund der Erfindung

Bei der Inspektion und/oder Wartung von Rohren oder Kanälen kann es notwendig sein, den zurückgelegten Weg einer Inspektionseinrichtung und/oder einer Wartungseinrichtung in dem Kanal zu kennen, etwa um eine Inspektion zu dokumentieren. Regelmäßig ist hierbei erforderlich, dass die gemessene Wegstrecke von der tatsächlichen Wegstrecke so wenig wie möglich abweicht, um beispielsweise eine im Rahmen einer Inspektion gefundenen Schadensstelle im Kanal bei einer anschließenden Wartung exakt wieder zu finden.

Hierzu ist es bekannt, ein Kabel oder einen Schiebeaal zwischen zwei rotierende Räder zu klemmen und mittels Drehen der Räder den Vorschub des Kabels oder des Schiebeaals zu bewirken. Anhand der Drehzahl der Räder kann dann die Zurückgelegte Strecke ermittelt werden. Nachteilig hierbei ist allerdings, dass die Räder bei einem nassem Kabel oder Schiebeaal durchdrehen können, ohne dass das Kabel oder der Schiebeaal bewegt wird. Dadurch kann es zu zum Teil erheblichen Ungenauigkeiten beim Messen der Wegstrecke kommen.

Des Weiteren ist es bekannt Messräder vorzusehen, die nicht für den Vortrieb des Schiebeaals vorgesehen sind, sondern lediglich für das Messen der zurückgelegten Wegstrecke. Eins solches System ist beispielsweise aus der DE 20 2006 014 216 U1 bekannt. Dort werden die Räder mit Diamantkorn beschichtet, was einen Schlupf vermieden soll, wenn der Schiebeaal über das Messrad geführt wird. Nachteilig hierbei ist allerdings, dass gewährleistet sein muss, dass der Schiebeaal während des Vortriebes korrekt auf dem Messrad aufliegt oder zwischen zwei Messrädern eingespannt ist. Durch das Einspannen der Schiebeaals zwischen zwei solchen Messrädern muss allerdings die Vorschubkraft erhöht werden. Versuche haben gezeigt, dass ein Einklemmen eines Schiebeaals zwischen zwei solchen Messrädern zu einer erheblichen mechanischen Abnutzung des Schiebeaals führen kann.

Aus der DE 10 2009 015 503 B4 ist eine Längenmessvorrichtung bekannt, mit der die Länge eines von einer Haspel abgewickelten Kabels gemessen werden kann. Das Kabel weist hierzu mehrere zueinander beabstandete magnetische Codierungen auf, die von zwei Erfassungsmitteln an der Haspel erfasst werden. Diese Vorrichtung hat allerdings den Nachteil, dass die maximale Genauigkeit der Längenmessung durch den Abstand der magnetischen Codierungen begrenzt sind - je größer der Abstand der magnetischen Codierungen umso geringer ist die Auflösung der Messgenauigkeit. Ferner ist das Herstellen eines Kabels mit solchen magnetischen Codierungen mi einem erheblichen Zeit- und Kostenaufwand verbunden.

Aus der EP 0 598 986 A1 ist eine Vorrichtung bekannt, mit der ein Vorschub eines Prüfkopfes in einem Rohr ermöglich wird. An dem Prüfkopf sind zwei Wagenhälften angeordnet, wobei eine Wagenhälfte fest mit dem Prüfkopf verbunden ist und die andere Wagenhälfte relativ zum Prüfkopf bewegbar ist. Zum Vorschub wird abwechselnd die eine oder die andere Wagenhälfte in dem Rohr eingespannt. Ist die hintere Wagenhälfte in dem Rohr eingespannt kann der Prüfkopf relativ zur hinteren Wagenhälfte verschoben werden, sodass auch die vordere Wagenhälfte verschoben wird.

Aus der US 4,085,808 und aus der FR 2 689 479 A1 sind Vortriebseinrichtung bekannt, um einen Inspektionskopf in einem Rohr zu bewegen. Die Vortriebsmittel sind als Raupen ausgebildet, die fest an dem Inspektionskopf angeordnet sind und gegen die Rohrwandung gedrückt werden.

Aus der EP 0 083 759 A2 und aus der GB 2 255 814 A sind Systeme bekannt, bei denen eine Inspektionseinheit rohrmittig im Rohr (in Rohren mit unterschiedlichen Durchmessern) angeordnet werden kann. Hierzu sind Anpressmittel vorgesehen, die an der Inspektionseinheit angeordnet sind und von der Inspektionseinheit abgespreizt werden können.

Aus der WO 2016/062664 A1 ist eine Vorrichtung bekannt, die in ein Rohr eingebracht werden kann. Die Vorrichtung weist Stellmittel auf, mit denen eine Hubeinrichtung angehoben bzw. abgesenkt werden kann, indem mittels eines Zahnrades eine Zahnradstange angetrieben wird, die relativ zu einem feststehenden Gestänge bewegt wird.

### Aufgabe der Erfindung

Aufgabe der Erfindung ist es daher, eine Vortriebseinrichtung bereitzustellen, bei der eine mechanische Abnutzung des Schiebeaals bei einem Vorschub aufgrund eines Schlupfes des Schiebeaals deutlich reduziert wird.

### Erfindungsgemäße Lösung

Erfindungsgemäß wird diese Aufgabe mit einer Vortriebseinrichtung zum linearen Bewegen eines Schiebeaals eines Rohrinspektionssystems, gemäß des unabhängigen Anspruches gelöst. Vorteilhafte Weiterbildungen der Erfindung sind in den abhängigen Ansprüchen angegeben.

Bereitgestellt wird demnach eine Vortriebseinrichtung zum linearen Bewegen eines Schiebeaals eines Rohrinspektionssystems, wobei die Vortriebseinrichtung aufweist:
- ein erstes Klemmbackenpaar zur Aufnahme eines ersten Abschnittes des Schiebeaals zwischen den Backen des ersten Klemmbackenpaares,
- ein zweites Klemmbackenpaar zur Aufnahme eines zweiten Abschnittes des Schiebeaals zwischen den Backen des zweiten Klemmbackenpaares, und
- zumindest eine Antriebseinheit, die mit dem ersten Klemmbackenpaar und mit dem zweiten Klemmbackenpaar gekoppelt ist,
wobei die zumindest eine Antriebseinheit angepasst ist, die Klemmbackenpaare in linearer Richtung zu bewegen, wobei ein Bewegen der Klemmbackenpaare das lineare Bewegen des Schiebeaals bewirkt.

Damit wird ein Vortrieb des Schiebeaals ermöglicht, bei dem der Schiebeaal auch bei z.B. in einer feuchten Umgebung oder bei nassem Schiebeaal nicht durch die Vortriebseinrichtung "rutscht". Ein solches Rutschen kann zu einer Verfälschung der Messung der zurückgelegten Vorschubstrecke führen. Ferner wird eine Abnutzung des Schiebeaals erheblich reduziert.

Die zumindest eine Antriebseinheit kann angepasst sein, das erste Klemmbackenpaar in entgegengesetzter Richtung zum zweiten Klemmbackenpaar zu bewegen.

Vorteilhaft ist es, wenn
- die zumindest eine Antriebseinheit eine erste Antriebseinheit und eine zweite Antriebseinheit aufweist,
- die erste Antriebseinheit ein erstes Schraubgetriebe mit einer ersten Gewindespindel und die zweite Antriebseinheit ein zweites Schraubgetriebe mit einer zweiten Gewindespindel aufweisen,
- der ersten Gewindespindel eine erste Spindelmutter und der zweiten Gewindespindel eine zweite Spindelmutter zugeordnet sind, und
- die erste Spindelmutter mit dem ersten Klemmbackenpaar und die zweite Spindelmutter mit dem zweiten Klemmbackenpaar gekoppelt sind.

Die beiden Antriebseinheiten können jeweils ein Antriebsmittel aufweisen, das angepasst ist, die jeweilige Gewindespindel in eine Rotationsbewegung zu versetzen, vorzugsweise derart, dass das erste Klemmbackenpaar und das Klemmbackenpaar mit der gleichen Geschwindigkeit in entgegengesetzte Richtungen bewegt werden.

Die zumindest eine Antriebseinheit kann ein Schraubgetriebe mit einer Gewindespindel aufweisen, wobei
- die Gewindespindel einen ersten Abschnitt und einen zweiten Abschnitt aufweist,
- dem ersten Abschnitt der Gewindespindel eine erste Spindelmutter und dem zweiten Abschnitt der Gewindespindel eine zweite Spindelmutter zugeordnet sind,
- die erste Spindelmutter mit dem ersten Klemmbackenpaar und die zweite Spindelmutter mit dem zweiten Klemmbackenpaar gekoppelt sind, und
- der erste Abschnitt der Gewindespindel ein Rechtsgewinde und der zweite Abschnitt der Gewindespindel ein Linksgewinde aufweisen.

Das Rechtsgewinde und das Linksgewinde können dieselbe Steigung aufweisen.

Die Antriebseinheit kann ein Antriebsmittel aufweisen, das angepasst ist, die Gewindespindel in eine Rotationsbewegung zu versetzen.

Vorteilhaft ist es, wenn dem ersten und dem zweiten Klemmbackenpaar jeweils ein Stellmittel zugeordnet ist, das angepasst ist, die Klemmbacken des jeweiligen Klemmbackenpaares
- zu schließen, um den zwischen den Backen angeordneten Abschnitt des Schiebeaals zwischen die Backen zu klemmen, und
- zu öffnen, um den zwischen den Backen angeordneten Abschnitt des Schiebeaals freizugeben.

Die Stellmittel können angepasst sein,
- die Klemmbacken des ersten Klemmbackenpaares zu öffnen, wenn die Klemmbacken des zweiten Klemmbackenpaares geschlossen werden, und/oder
- die Klemmbacken des zweiten Klemmbackenpaares zu öffnen, wenn die Klemmbacken des ersten Klemmbackenpaares geschlossen werden.

Zumindest eine Klemmbacke jedes Klemmbackenpaares kann an der dem Schiebeaal zugewandten Seite bzw. Oberfläche eine längliche Aussparung aufweisen, in die der Schiebeaal beim Schließen des jeweiligen Klemmbackenpaares in Eingriff gelangt.

Die Oberfläche der Aussparung kann zumindest abschnittsweise rutschfest ausgestaltet sein und/oder eine flexible Beschichtung aufweisen.

Die Antriebseinheit kann ein Führungsmittel aufweisen, entlang der die Klemmbackenpaare bewegt werden.

Das Führungsmittel kann den Spindelmuttern zugeordnet sein und in Längsführungen der Spindelmuttern eingreifen.

Vorteilhaft ist es, wenn
- die zumindest eine Antriebseinheit eine erste Antriebseinheit und eine zweite Antriebseinheit aufweist,
- die erste Antriebseinheit ein erstes Zahnradgetriebe mit einem ersten Zahnrad und die zweite Antriebseinheit ein zweites Zahnradgetriebe mit einem zweiten Zahnrad aufweisen,
- dem ersten Zahnrad eine erste Zahnstange und dem zweiten Zahnrad eine zweite Zahnstange zugeordnet sind, und
- die erste Zahnstange mit dem ersten Klemmbackenpaar und die zweite Zahnstange mit dem zweiten Klemmbackenpaar gekoppelt sind.

Die beiden Antriebseinheiten können jeweils ein Antriebsmittel aufweisen, das angepasst ist, das jeweilige Zahnrad in eine Rotationsbewegung zu versetzen, vorzugsweise derart, dass das erste Klemmbackenpaar und das Klemmbackenpaar über die jeweilige Zahnstange mit der gleichen Geschwindigkeit in entgegengesetzte Richtungen bewegt werden.

Vorteilhaft ist es, wenn die Antriebseinheiten mit einer Steuer- und Messeinrichtung gekoppelt sind, wobei die Steuer- und Messeinrichtung angepasst ist
- die Antriebseinheiten so zu steuern, dass das erste Klemmbackenpaar in entgegengesetzter Richtung zum zweiten Klemmbackenpaar bewegt wird, und
- die zurückgelegte Wegstrecke des Schiebeaals zu ermitteln.

Die Steuer- und Messeinrichtung kann angepasst sein, die zurückgelegte Wegstrecke des Schiebeaals anhand der Linearbewegungen der Klemmbackenpaare zu ermitteln.

Der Steuer- und Messeinrichtung kann eine Anzeigeeinrichtung zugeordnet sein, zum Anzeigen der zurückgelegten Wegstrecke des Schiebeaals.

Die Antriebsmittel können einen Elektromotor umfassen.

Bereit gestellt wird ferner eine Vortriebseinrichtung zum linearen Bewegen eines Schiebeaals eines Inspektionssystems, insbesondere Rohrinspektionssystem, aufweisend zumindest eine Antriebseinheit zum linearen Bewegen des Schiebeaals, wobei
- die Antriebseinheit zumindest ein als Kette oder Zahnriemen ausgestaltetes Vortriebselement aufweist, das mit einem Zahnradantrieb gekoppelt, und
- das Vortriebselement in am Schiebeaal radial umlaufende Vertiefungen eingreift,
wobei ein Vortrieb des Vortriebselements das lineare Bewegen des Schiebeaals bewirkt.

Dem Vortriebselement kann ein Anpressmittel zugeordnet sein, das einen schiebeaalseitig angeordneten Abschnitt des Vortriebselements gegen den Schiebeaal drückt.

Das Anpressmittel ist vorzugsweise federnd gelagert.

Die Antriebseinheit kann eine erste Antriebseinheit und eine zweite Antriebseinheit aufweisen, wobei die erste Antriebseinheit an einer Seite des Schiebeaals und die zweite Antriebseinheit an der gegenüberliegenden Seite des Schiebeaals angeordnet sind.

Die Antriebseinheiten können mit einer Messeinrichtung gekoppelt sein, wobei die Messeinrichtung angepasst ist die zurückgelegte Wegstrecke des Schiebeaals zu ermitteln.

Die Messeinrichtung kann angepasst sein, die zurückgelegte Wegstrecke des Schiebeaals anhand des Vortriebs des Vortriebselements zu ermitteln.

Der Messeinrichtung kann eine Anzeigeeinrichtung zugeordnet sein, zum Anzeigen der zurückgelegten Wegstrecke des Schiebeaals.

Ferner wird durch die Erfindung die Verwendung einer erfindungsgemäßen Vortriebseinrichtung in einem Inspektions- und/oder Wartungssystem, insbesondere Rohrinspektions- und/oder Wartungssystem, bereitgestellt.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: eine erste Ausgestaltung einer erfindungsgemäßen Vortriebseinrichtung;
- Fig. 2: eine alternative Ausgestaltung der in Fig. 1 gezeigten erfindungsgemäßen Vortriebseinrichtung;
- Fig. 3: zwei Beispiele einer Klemmbacke einer erfindungsgemäßen Vortriebseinrichtung;
- Fig. 4: eine zweite Ausgestaltung einer erfindungsgemäßen Vortriebseinrichtung;
- Fig. 5: ein beispielhaftes Anwendungsszenario einer erfindungsgemäßen Vortriebseinrichtung; und
- Fig. 6: eine dritte Ausgestaltung einer Vortriebseinrichtung.

### Detaillierte Beschreibung der Erfindung

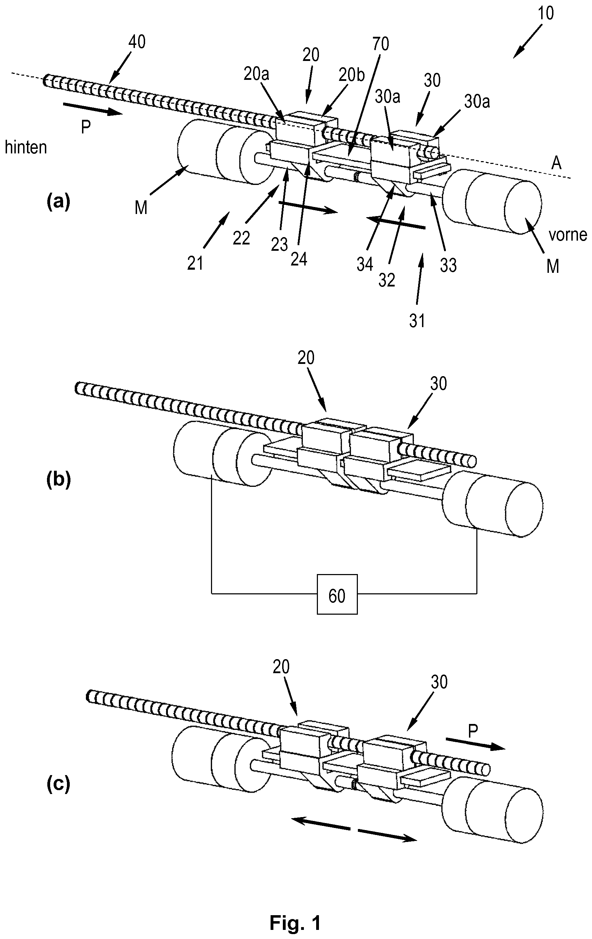

**Fig. 1** zeigt eine Ausgestaltung einer erfindungsgemäßen Vortriebseinrichtung 10, wobei in Abbildung (a) die Vortriebseinrichtung in einer ersten Arbeitsstellung, in Abbildung (b) in einer zweiten Arbeitsstellung und in Abbildung (c) in einer dritten Arbeitsstellung gezeigt ist.

Die Vortriebseinrichtung 10 weist hier eine erste Antriebseinheit 21 und eine zweite Antriebseinheit 31 auf. Die Antriebseinheit 21, 31 sind jeweils mit einem Klemmbackenpaar 20, 31 gekoppelt. Mit Hilfe der beiden Antriebseinheiten 21, 31 werden die Klemmbackenpaare 20, 30 linear vor und zurück bewegt, d.h. die Klemmbackenpaare werden entlang der Achse A bewegt.

Mit den Klemmbackenpaaren 20, 30, die jeweils eine erste Klemmbacke 20a, 30a und eine zweite Klemmbacke 20b, 30b aufweisen, wird der Schiebeaal 40 vor oder zurück bewegt. Hierzu wird der Schiebeaal zwischen den Klemmbacken der Klemmbackenpaare eingespannt, sodass der Schiebeaal beim Bewegen der Klemmbackenpaare mitbewegt wird.

Ein Schlupf des Schiebeaals 40 zwischen den Klemmbacken ist aufgrund der erfindungsgemäßen Ausgestaltung der Klemmbacken nahezu ausgeschlossen. Während bei den im Stand der Technik vorgesehenen Antriebsrädern der Schiebeaal lediglich an einem Punkt auf den Rädern aufliegt, liegt der Schiebeaal 40 bei den erfindungsgemäßen Klemmbacken 20a, 20b, 30a, 30b über einen längeren Abschnitt auf den Klemmbacken auf. Ferner kann durch diese Ausgestaltung der Klemmbacken die Kraft, mit der der Schiebeaal 40 zwischen den Klemmbacken eingespannt wird, sehr groß gewählt werden, ohne dass der Schiebeaal dadurch beschädigt wird. Denn die Kraft wirkt auf einer deutlich größeren Fläche auf den Schiebeaal, als es bei Antriebsrädern der Fall ist, wo die Kraft lediglich in einem Punkt auf den Schiebeaal wirkt. Aufgrund des deutlich reduzierten Schlupfes wird auch die mechanische Abnutzung erheblich reduziert. Versuche haben gezeigt, dass selbst bei einer nassen oder öligen Oberfläche eines Schiebaals aus Glasfasern nahezu kein Schlupf auftritt.

Dieser stark reduzierte bzw. nicht mehr vorhandene Schlupf des Schiebeaals 40 zwischen den Klemmbacken 20a, 20b, 30a, 30b führt letztlich zu einer erheblichen Verbesserung der Messung des Vorschubes des Schiebeaals.

Die erste Antriebseinheit 21 und eine zweite Antriebseinheit 31 weisen jeweils ein Schraubgetriebe 22, 32 auf. Die Schraubgetriebe 22, 32 weisen ihrerseits jeweils eine Gewindespindel 23, 33 und eine daran angeordnete Spindelmutter 24, 34 auf. Eine Rotation der Gewindespindel 23, 33 bewirkt eine translatorische Bewegung der daran angeordneten Spindelmutter 24, 34, d.h. die Rotationsbewegung der Gewindespindel 23, 33 wird in eine lineare Bewegung der jeweiligen Spindelmutter 24, 34 umgesetzt, sodass sich die Spindelmuttern je nach Drehrichtung der Gewindespindel entlang der Achse A vor oder zurück bewegen und dabei den Schiebeaal 40 mitnehmen, sofern die Klemmbacken geschlossen sind.

Die Spindelmuttern 24, 34 selbst sind an einem Führungsmittel 70 angeordnet, das eine Rotationsbewegung der Spindelmuttern verhindert. Das Führungsmittel 70 ist hier als Platte ausgestaltet, die in eine dafür vorgesehene Aussparung in die Spindelmuttern eingreift.

An den Spindelmuttern 24, 34 sind die Klemmbackenpaar 20, 30 angeordnet, wo an der ersten Spindelmutter 24 das erste Klemmbackenpaar 20 und an der zweiten Spindelmutter 34 das zweite Klemmbackenpaar 30 angeordnet sind. Die beiden Klemmbackenpaare 20, 30 können so unabhängig voneinander bewegt werden.

Erfindungsgemäß ist es vorgesehen, dass die beiden Klemmbackenpaare unabhängig voneinander in die jeweils entgegengesetzte Richtung bewegbar sind. Das heißt, während das erste Klemmbackenpaar 20 nach hinten bewegt wird, wir das zweite Klemmbackenpaar 30 nach vorne bewegt. Dies wird dadurch erreicht, indem die Gewindespindeln 23, 33 in die entgegengesetzte Richtung gedreht werden, vorausgesetzt, dass beide Gewindespindeln ein Rechtsgewinde oder beide Gewindespindeln ein Linksgewinde aufweisen. Weisen die erste Gewindespindel 23 ein Linksgewinde und die zweite Gewindespindel 33 ein Rechtsgewinde auf, können die beiden Klemmbackenpaare 20, 30 in die entgegengesetzte Richtung bewegt werden, indem beide Gewindespindeln in dieselbe Richtung gedreht werden.

Zum Antrieb der Gewindespindeln 23, 33 ist hier jeweils ein Antriebsmittel M vorgesehen, der als Elektromotor ausgestaltet sein kann.

Den beiden Klemmbackenpaaren ist jeweils ein hier nicht gezeigtes Stellmittel zugeordnet, mit denen die Klemmbacken geöffnet und geschlossen werden können.

Weil bei einem entgegengesetzten Bewegen der Klemmbackenpaare 20, 30 der Schiebeaal nicht bewegt werden kann, wenn beide Klemmbackenpaare geschlossen oder beide Klemmbackenpaare geöffnet sind, ist es erfindungsgemäß vorgesehen, dass die beiden Klemmbackenpaare 20, 30 alternierend geöffnet und geschlossen werden.

In Abbildung (a) ist die erfindungsgemäße Vortriebseinrichtung 10 in einer ersten Arbeitsstellung gezeigt, bei der das erste Klemmbackenpaar 20 von hinten nach vorne und das zweite Klemmbackenpaar 30 von vorne nach hinten bewegt werden. Die beiden Klemmbackenpaare bewegen sich also aufeinander zu. Das erste Klemmbackenpaar 20 ist hierbei geschlossen und nimmt den zwischen den beiden Klemmbacken 20a, 20b eingespannten Schiebeaal 40 mit, d.h. das erste Klemmbackenpaar 20 bewegt den Schiebeaal 40 von hinten nach vorne, wie durch den Pfeil P angedeutet. Das zweite Klemmbackenpaar 30 hingegen ist geöffnet und kann sich daher ohne den Schiebeaal 40 zu berühren von vorne nach hinten bewegen.

Bei der in Abbildung (a) gezeigten Arbeitsstellung wird der Schiebeaal 40 also nur von dem ersten Klemmbackenpaar 20 nach vorne bewegt.

In Abbildung (b) ist eine Neutralstellung bzw. eine erste Übergabestellung der erfindungsgemäßen Vortriebseinrichtung 10 gezeigt. In dieser Stellung haben sich die beiden Klemmbackenpaare 20, 30 maximal aufeinander zubewegt. Das erste Klemmbackenpaar 20 wird nun geöffnet und gibt somit den Schiebeaal 40 frei. Gleichzeitig wird das zweite Klemmbackenpaar 30 geschlossen, sodass der Schiebeaal 40 zwischen den Klemmbacken 30a, 30b des zweiten Klemmbackenpaars 30 eingespannt wird. Dieser Vorgang wird als "erste Übergabe" bezeichnet, bei der der Schiebeaal 40 von dem ersten Klemmbackenpaar 20 an das zweite Klemmbackenpaar 30 übergeben wird.

Nach Abschluss der Übergabe wird bewegen sich die beiden Klemmbackenpaar 20, 30 von einander weg, d.h. das erste Klemmbackenpaar 20 bewegt sich im geöffneten Zustand nach hinten und das zweite Klemmbackenpaar 30 bewegt sich im geschlossenen Zustand nach vorne und nimmt dabei den Schiebeaal 40 mit, wie durch den Pfeil P angedeutet. Dies wird durch Umkehren der Rotationsrichtung der jeweiligen Gewindespindel 23, 33 erreicht.

Bei der in Abbildung (c) gezeigten Arbeitsstellung wird der Schiebeaal 40 also nur von dem zweiten Klemmbackenpaar 30 nach vorne bewegt.

Nachdem sich die beiden Klemmbackenpaare 20, 30 maximal voneinander entfernt haben, hat die erfindungsgemäße Vortriebseinrichtung 10 eine zweite Übergabestellung erreicht. In dieser Arbeitsstellung wird das zweite Klemmbackenpaar 30 geöffnet und gibt damit den Schiebeaal 40 frei. Gleichzeitig wird das erste Klemmbackenpaar 20 geschlossen, sodass der Schiebeaal 40 zwischen den Klemmbacken 20a, 20b des zweiten Klemmbackenpaars 20 eingespannt wird. Dieser Vorgang wird als "zweite Übergabe" bezeichnet, bei der der Schiebeaal 40 von dem zweiten Klemmbackenpaar 30 an das erste Klemmbackenpaar 20 übergeben wird. Im Anschluss an die zweite Übergabe werden die beiden Klemmbackenpaare 20, 30 wieder aufeinander zubewegt, wie in Abbildung (a) gezeigt.

Die erste und die zweite Übergabe können so ausgestaltet sein, dass der Schiebeaal 40 während der Übergabe nahezu nicht stillsteht, d.h. der Vorschub des Schiebeaals nicht unterbrochen wird. Dies wird durch ein entsprechend schnelles Öffnen und Schließen der beiden Klemmbackenpaare erreicht. Damit kann ein kontinuierlicher Vorschub des Schiebeaals erreicht werden.

In entsprechender Weise kann die erfindungsgemäße Vortriebseinrichtung auch so betrieben werden, dass der Schiebeaal in die entgegengesetzte Richtung bewegt wird, also von vorne nach hinten. Dies wird dadurch erreicht, indem in Abbildung (a) das zweite Klemmbackenpaar 30 geschlossen und das erste Klemmbackenpaar 20 geöffnet sind und in Abbildung (c) das erste Klemmbackenpaar 20 geschlossen und das zweite Klemmbackenpaar 30 geöffnet sind.

Die beiden Antriebseinheiten 21, 31 sind hier mit einer Steuer- und Messeinrichtung 60 gekoppelt. Mit Hilfe der Steuereinrichtung können die Antriebsmittel M gesteuert werden, d.h. es kann gesteuert werden, mit welcher Rotationsgeschwindigkeit und in welche Rotationsrichtung die Gewindespindeln 23, 33 bewegt werden. Aufgrund des bekannten Hubs der an den Gewindespindeln angeordneten Spindelmuttern 24, 34 kann der Vorschub des Schiebeaals 40, das heißt die Strecke, die der Schiebeaal bewegt wurde, ermittelt werden. Diese ist auch dann möglich, wenn der Schiebeaal abwechselnd vor und zurück bewegt wird. Die zurückgelegte Strecke ist dann die Summe der zurückgelegten Strecken in beide Richtungen.

Der Messeinrichtung kann eine Anzeigeeinrichtung zugeordnet sein, an der die zurückgelegte Strecke des Schiebeaals zu anzeige gebracht werden kann.

Den beiden Klemmbackenpaaren 20, 30 kann jeweils ein Sensor zugeordnet sein, mit denen detektiert werden kann, ob das jeweilige Klemmbackenpaar geöffnet oder geschlossen ist. Diese Sensoren können mit der Steuereinrichtung 60 gekoppelt sein. Die Steuereinrichtung kann dann angepasst sein, ein Bewegen der Klemmbackenpaare nur dann zu veranlassen, wenn mindestens eine der beiden Klemmbackenpaare geöffnet ist. Damit kann einer Beschädigung des Schiebeaals oder der Vortriebseinrichtung vorgebeugt werden, etwa dann wenn sich ein Klemmbackenpaar nicht mehr öffnen lässt.

Alternativ oder zusätzlich können die Antriebsmittel M mit einer Rutschkupplung oder mit einem Drehmomentbegrenzer ausgestattet sein.

Vorteilhaft ist es, wenn die beiden Klemmbackenpaare mit derselben Geschwindigkeit verfahren werden, um eine weitgehend gleichmäßige Vorschubgeschwindigkeit des Schiebeaals zu gewährleisten.

Ferner ist es vorteilhaft, wenn das geschlossene Klemmbackenpaar erste dann geöffnet wird, nachdem das jeweils andere Klemmbackenpaar geschlossen ist. Dadurch wird vermieden, dass sich der Schiebeaal 40 relativ zu den Klemmbackenpaaren bewegen kann, wenn beide Klemmbackenpaare kurzzeitig geöffnet sind.

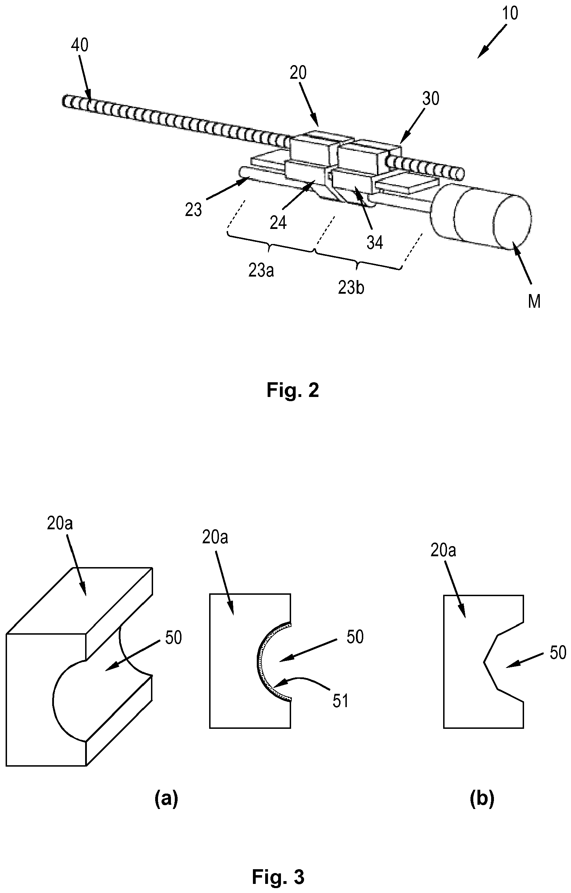

**Fig. 2** zeigt eine alternative Ausgestaltung der in Fig. 1 gezeigten Vortriebseinrichtung 10.

Das Prinzip des Vorschubs des Schiebeaals 40 entspricht dem mit Bezug auf Fig. 1 beschriebenen Prinzip. Im Unterschied zur Vortriebseinrichtung nach Fig. 1 ist hier lediglich eine Antriebseinheit vorgesehen, die eine Gewindespindel 23 und zwei daran angeordnete Spindelmuttern 24, 34 aufweist. Die Gewindespindel 23 wird mit einem Antriebsmittel M, etwa ein Elektromotor angetrieben.

Um eine gegenläufige Bewegung der beiden Spindelmuttern 24, 34 zu erreichen, ist es hier vorgesehen, dass die Gewindespindel 23 zwei Abschnitte 23a und 23b aufweist, wobei der erste Abschnitt 23a der ersten Spindelmutter 24 und der zweite Abschnitt 23b der zweiten Spindelmutter 34 zugeordnet ist. Ferner weist der erste Abschnitt 23a ein Rechtsgewinde und der zweite Abschnitt 23b ein Linksgewinde (oder umgekehrt) auf. Damit wird erreicht, dass in Abhängigkeit der Drehrichtung der Gewindespindel 23 die beiden Spindelmuttern 24, 34 entweder aufeinander zubewegt oder voneinander wegbewegt werden. Gleichzeitig wird so gewährleistet, dass die beiden Klemmbackenpaare absolut synchron bewegt werden.

Das Öffnen und Schließen der beiden Klemmbackenpaare 20, 30 zum Bewerkstelligen des Vorschubes des Schiebeaals 40 erfolgt hierbei wie mit Bezug auf Fig. 1 beschrieben.

**Fig. 3** zeigt zwei verschiedene Ausgestaltungen einer Klemmbacke in einem Querschnitt, wobei in Abbildung (a) zusätzlich eine perspektivische Ansicht gezeigt ist.

Die Klemmbacke 20a gemäß Abbildung (a) besteht aus einem im Wesentlichen quaderförmigen Block, wobei an der dem Schiebeaal zugewandten Seite eine längliche Aussparung 50 vorgesehen ist, die von der vorderen Stirnseite bis zur hinteren Stirnseite des Blockes verläuft, an beiden Stirnseiten offen ist und einen vorbestimmten Radius aufweist. Der Radius der Aussparung ist so bemessen, dass der Schiebeaal in die Aussparung 50 eingreifen kann. Ferner ist die Tiefe der Aussparung so zu bemessen, dass diese maximal dem Radius des Schiebeaals entspricht, damit der Schiebeaal sicher zwischen zwei Klemmbacken eingespannt werden kann.

An der Oberflache der Aussparung 50 kann in einer Ausgestaltung der Klemmbacke zumindest abschnittsweise eine rutschfeste Beschichtung 51 aufgebracht sein. Damit kann der Schlupf des Schiebeaals nochmals reduziert werden. Vorteilhaft ist es zudem, wenn diese Beschichtung 51 leicht flexibel ausgestaltet ist, um beim Schließen der Klemmbacken leicht nachzugeben. Die Beschichtung 51 bietet daher einen zusätzlichen Schutz vor Beschädigungen des eingespannten Schiebeaals. Beispielsweise kann die Beschichtung Gummi oder einen sonstigen Kunststoff aufweisen.

In Abbildung (b) ist eine alternative Ausgestaltung einer Klemmbacke 20a gezeigt. Diese Klemmbacke weist ebenfalls eine im Wesentlichen quaderförmige Grundform auf. An der dem Schiebeaal zugewandten Seite ist eine längliche Aussparung 50 vorgesehen, die hier einen Prisma förmigen Querschnitt aufweist. Damit können Abweichungen im Durchmesser oder im Querschnitt des Schiebeaals ausgeglichen werden.

In Fig. 3 sind Klemmbacken mit einer quaderförmigen Grundform gezeigt. Erfindungsgemäß können die Klemmbacken aber jede andere Grundform aufweisen, sofern sich die Grundform für Klemmbacken in einer erfindungsgemäßen Vortriebseirichtung eignet.

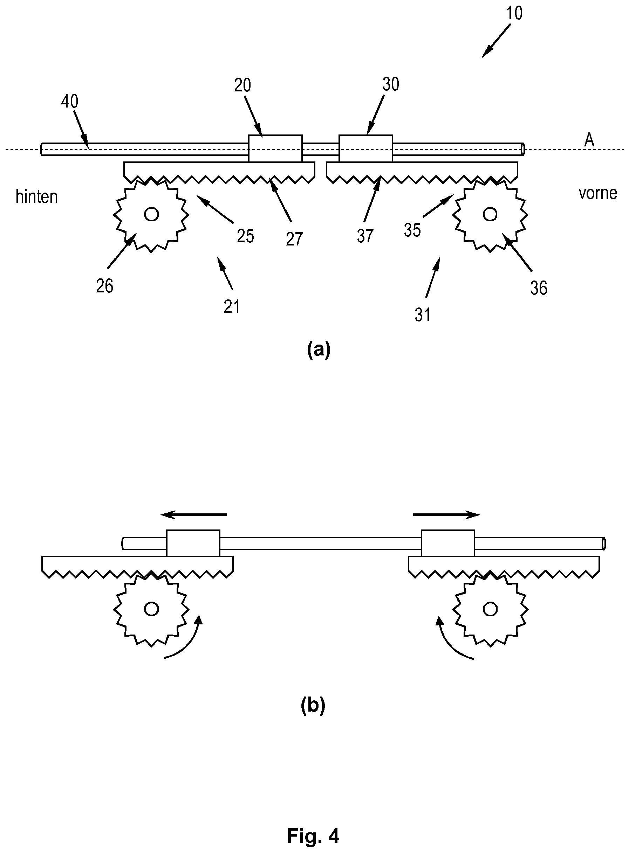

**Fig. 4** zeigt eine weitere erfindungsgemäße Ausgestaltung einer Vortriebseinrichtung 10.

Die Vortriebseinrichtung 10 weist auch hier eine erste Antriebseinheit 21 und eine zweite Antriebseinheit 31 auf. Jede der beiden Antriebseinheiten 21, 31 weist jeweils ein Zahnradgetriebe 25, 35 auf, das aus einem Zahnrad 26, 36 und aus einer mit dem jeweiligen Zahnrad zusammenwirkenden Zahnstange 27, 37 besteht.

Die beiden Zahnstangen 27, 37 werden von dem jeweilige Zahnrad 26, 36 angetrieben, wobei die Zahnstangen so angeordnet sind, dass sie parallel zur Achse A relativ zur Vortriebseinrichtung 10 hin und her bewegbar sind. Die Zahnräder 26, 36 werden ihrerseits jeweils von einem hier nicht gezeigten Antriebsmittel, etwa ein Elektromotor angetrieben. Die Elektromotoren können mit einer Steuereinrichtung gekoppelt sein. Die Steuereinrichtung steuert die Elektromotoren derart, dass sie ein entgegengesetztes Bewegen der Zahnstangen 27, 37 bewirken. Vorzugsweise werden die Elektromotoren so gesteuert, dass sie die Zahnstangen vollkommen synchrones bewegen, vorzugsweise auch mit gleicher Geschwindigkeit.

In einer alternativen Ausgestaltung kann ein einziges Antriebsmittel vorgesehen sein, mit dem beiden Zahnräder angetrieben werden. Um dabei ein gegenläufiges Bewegen der Zahnstangen 27, 37 zu erreichen, kann das erste Zahnrad 26 von dem Antriebsmittel direkt angetrieben werden, während das zweite Zahnrad 36 über einen zwischengeschalteten Übersetzter, etwa ein weiteres Zahnrad, angetrieben wird. Dadurch wird ein vollkommen synchrones Bewegen der Zahnstangen in entgegengesetzte Richtungen gewährleistet.

An den Zahnstangen 27, 37 ist jeweils ein Klemmbackenpaar 20, 30 angeordnet, die zum Vorschub des Schiebeaals 40 vorgesehen sind.

Die Funktionsweise der in Fig. 4 gezeigten erfindungsgemäßen Vortriebseinrichtung 10 entspricht der in Fig. 1 gezeigten Vortriebseinrichtung. Die Übergabe des Schiebeaals von dem ersten Klemmbackenpaar 20 an das zweite Klemmbackenpaar 30 (und umgekehrt) erfolgt hierbei wie mit Bezug auf Fig. 1 beschrieben. Die in Abbildung (a) gezeigte Arbeitsstellung entspricht hierbei der in Fig. 1, Abbildung (b) gezeigten Arbeitsstellung. Die in Abbildung (b) gezeigte Arbeitsstellung entspricht hierbei der in Fig. 1, Abbildung (c) gezeigten Arbeitsstellung.

Die beiden Antriebseinheiten 21, 31 sind auch hier mit einer hier nichtgezeigten Messeinrichtung gekoppelt. Anhand der Rotation der Zahnräder 26, 36 kann die Messeinrichtung den Vorschub bzw. die Wegstrecke des Schiebeaals ermitteln.

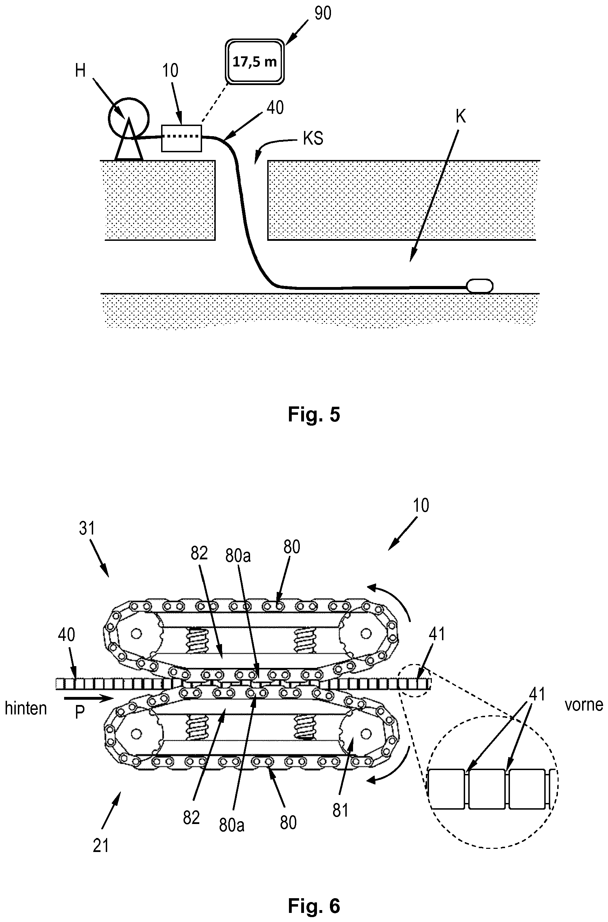

**Fig. 5** zeigt ein beispielhaftes Anwendungsszenario einer erfindungsgemäßen Vortriebseinrichtung bzw. die Verwendung einer erfindungsgemäßen Vortriebseinrichtung 10 in einem Inspektions- bzw. Wartungssystem, insbesondere Rohrinspektions- bzw. Wartungssystem.

Im Bereich des Kanalschachtes KS ist eine Haspel H angeordnet, an der ein Schiebeaal 40 aufgewickelt ist. Von der Haspel H wird der Schiebeaal abgewickelt und über den Kanalschacht KS in den Kanal K eingeführt. An dem vorderen Ende des Schiebeaals 40 ist hier eine Kanalkamera angeordnet. Es können aber auch andere Inspektions- oder Manipulationseinrichtungen angeordnet sein, etwa eine Spüldüse, ein Fräswerkzeug, oder sonstige Sensoren.

Der Vorschub des Schiebeaals 40 wird mit Hilfe einer erfindungsgemäßen Vortriebseinrichtung 10 bewerkstelligt, die hier ebenfalls im Bereich des Kanalschachtes KS angeordnet ist. Der Schiebeaal 40 wird der Vortriebseinrichtung 10 zugeführt, die dann mit Hilfe der vorstehend beschriebenen Antriebseinheiten 21, 31 den Schiebeaal aktiv in den Kanal K schiebt. Die Verwendung der erfindungsgemäßen Vortriebseinrichtung 10 ermöglicht es, die Länge des sich im Kanal K befindlichen Abschnittes des Schiebeaals zu bestimmen.

Die Vortriebseinrichtung 10 ist hier ferner mit einer Anzeigeeinrichtung 90 gekoppelt, an der die Länge des sich im Kanal K befindlichen Abschnittes des Schiebeaals 40 zur Anzeige gebracht werden kann. Gemäß dem in Fig. 5 gezeigten Beispiel beträgt die Länge des Schiebeaals zwischen der Vortriebseinrichtung 10 und der Kanalkamera 17,5 Meter. Die Tiefe des Kanalschachtes kann hierbei als Offset berücksichtigt werden.

Die Anzeigeeinrichtung 90 kann drahtlos oder drahtgebunden mit der Vortriebseinrichtung 10 gekoppelt sein.

Alternativ kann die Vortriebseinrichtung 10 auch am Boden des Kanalschachtes KS angeordnet werden.

Ferner kann mit der Vortriebseinrichtung 10 der Schiebeaal 40 auch wieder aus dem Kanal K herausgezogen werden.

In einer alternativen Ausgestaltung kann die erfindungsgemäße Vortriebseinrichtung 10 auch auf einem Inspektionswagen angeordnet sein, der im Kanal K verfahrbar ist. Der Inspektionswagen kann einen Schiebeaal hinter sich herziehen und diesen bei Bedarf vom Inspektionswagen aus vorschieben. Beispielsweise kann der Inspektionswagen bis zu einer Kanalabzweigung vorfahren und dann dort den Schiebeaal mit Hilfe der erfindungsgemäßen Vortriebseinrichtung 10 in ein Nebenrohr einschieben. Mit Hilfe der erfindungsgemäßen Vortriebseinrichtung 10 kann dann exakt festgestellt werden, wie weit der Schiebeaal in das Nebenrohr eingeschoben wurde.

**Fig. 6** zeigt eine weitere Ausgestaltung einer Vortriebseinrichtung 10.

Die Vortriebseinrichtung 10 weist auch hier zwei Antriebseinheiten 21, 31 auf. Jede der beiden Antriebseinheiten 21, 31 weist ein Vortriebselement 80 und eine dem Vortriebselement 80 zugeordnete Antriebseinrichtung 81 zum Antrieb des jeweiligen Vortriebselement 80 auf. Das Vortriebselement 80 kann ein Zahnradkette oder eine Zahnriemen sein. Die Antriebseinrichtung 81 jeweils kann aus zwei Zahnrädern bestehen, wobei wenigstens einem Zahnrad ein hier nicht gezeigtes Antriebsmittel, etwa ein Elektromotor, zugeordnet ist.

Die Antriebseinheiten 21, 31 sind an zwei gegenüberliegenden Seiten des Schiebeaals 40 angeordnet, sodass der Schiebeaal zwischen den beiden Antriebseinheiten verläuft und von diesen vorgeschoben wird.

Der schiebeaalseitige Abschnitt 80a des jeweiligen Vortriebselements 80 wird gegen den Schiebeaal gepresst, sodass der Schiebeaal 40 zwischen die beiden Vortriebselemente 80 eingespannt ist. Zum Pressen der schiebeaalseitigen Abschnitte 80a gegen den Schiebeaal 40 ist den Vortriebselementen 80 ein Anpressmittel 82 zugeordnet, das bezogen auf den Schiebeaal in radialer Richtung bewegbar ist. Den beiden Anpressmittel 82 können ein oder mehrere Federelemente zugeordnet sein, die das jeweilige Anpressmittel mit einer vorbestimmten Kraft in Richtung des Schiebeaals drücken.

Die Antriebseinheiten 21, 31 können mit einer Steuer- und Messeinrichtung gekoppelt sein. Die Messeinrichtung kann anhand der Drehung der Zahnräder 81 den Vorschub bzw. die Länge des vorgeschobenen Abschnittes des Schiebeaals bestimmen.

Anstelle der zweiten Antriebseinheit 31 können auch freilaufende Räder vorgesehen sein, gegen die der Schiebeaal gepresst wird.

An der Oberfläche des Schiebeaals 40 können radial umlaufende Vertiefungen oder Einkerbungen 41 vorgesehen sein, die vorzugsweise gleichmäßig beabstandet bzw. einem Muster folgend angeordnet sind. Die Vortriebselemente 80 können ihrerseits an der dem Schiebeaal zugewandten Oberfläche Überstände aufweisen, die so ausgestaltet sind, dass sie zumindest teilweise mit den Einkerbungen 41 des Schiebaals 40 in Eingriff bringbar sind. Dadurch werden zwei Vorteile erreicht. Erstens kann ein Schlupf des Schiebeaals zwischen den beiden Antriebseinheiten erheblich reduziert werden. Zweitens kann der Anpressdruck der beiden schiebeaalseitigen Abschnitte 80a der Vortriebselemente 80 gegen den Schiebeaal reduziert werden, sodass ein mechanischer Verschleiß des Schiebeaals reduziert wird.

Derartige Einkerbungen 41 können auch bei einem Schiebeaal gemäß den Figuren 1 bis 4 vorgesehen sein. Die dort gezeigten Klemmbacken können dann in der Aussparung 50 mit den Einkerbungen korrespondierende Überstände aufweisen. Damit kann der Schlupf des Schiebeaals noch weiter reduziert bzw. ausgeschlossen werden.

Vorstehend sind erfindungsgemäße Ausführungsbeispiele beschrieben worden, bei denen ein Schiebeaal 40 mit Hilfe der Antriebseinheiten bewegt wird. Anstelle des Schiebeaals kann aber auch ein Schlauch, etwa ein Spülschlauch, ein Kabel oder dergleichen bewegt bzw. vorgeschoben werden.

### Bezugszeichen:

- 10: Vortriebseinrichtung
- 20: erstes Klemmbackenpaar
- 20a, 20b: Klemmbacken des ersten Klemmbackenpaars
- 21: Antriebseinheit bzw. erste Antriebseinheit
- 22: Schraubgetriebe bzw. erstes Schraubgetriebe
- 23: Gewindespindel bzw. erste Gewindespindel
- 23a: erster Abschnitt der Gewindespindel 23
- 23b: zweiter Abschnitt der Gewindespindel 23
- 24: erste Spindelmutter
- 25: Zahnradgetriebe bzw. erstes Zahnradgetriebe
- 26: erstes Zahnrad
- 27: erste Zahnstange
- 30: zweites Klemmbackenpaar
- 30a, 30b: Klemmbacken des zweiten Klemmbackenpaars
- 31: zweite Antriebseinheit
- 32: zweites Schraubgetriebe
- 33: zweite Gewindespindel
- 34: zweite Spindelmutter
- 35: zweites Zahnradgetriebe
- 36: zweites Zahnrad
- 37: zweite Zahnstange
- 40: Schiebeaal
- 41: radial umlaufende Vertiefungen am Schiebeaal
- 50: Aussparung in der Klemmbacke
- 51: rutschfeste, ggf. flexible Oberfläche der Aussparung 50
- 60: Steuer- und Messeinrichtung
- 70: Führungsmittel
- 80: Vortriebselement, z.B. Kette oder Zahnriemen
- 80a: schiebeaalseitig angeordneter Abschnitt des Schiebeaals 40
- 81: Zahnradantrieb
- 82: Anpressmittel
- 90: Anzeigeeinrichtung
- A: Achse, entlang der sich die Klemmbackenpaare bewegen
- K: Kanal bzw. Rohr
- KS: Kanalschacht
- H: Haspel
- M: Antriebsmittel, z.B. Elektromotor
- P: Pfeil; Bewegungsrichtung des Schiebeaals 40

## Patentansprüche

1. Vortriebseinrichtung (10) zum linearen Bewegen eines Schiebeaals (40) eines Rohrinspektionssystems, **dadurch gekennzeichnet, dass** die Vortriebseinrichtung aufweist:
- ein erstes Klemmbackenpaar (20) zur Aufnahme eines ersten Abschnittes des Schiebeaals (40) zwischen den Backen (20a; 20b) des ersten Klemmbackenpaares (20),
- ein zweites Klemmbackenpaar (30) zur Aufnahme eines zweiten Abschnittes des Schiebeaals (40) zwischen den Backen (30a; 30b) des zweiten Klemmbackenpaares (30), und
- zumindest eine Antriebseinheit (21; 31), die mit dem ersten Klemmbackenpaar (20) und mit dem zweiten Klemmbackenpaar (30) gekoppelt ist,
wobei die zumindest eine Antriebseinheit (21; 31) angepasst ist, die Klemmbackenpaare (20; 30) in linearer Richtung zu bewegen, wobei ein Bewegen der Klemmbackenpaare (20; 30) das lineare Bewegen des Schiebeaals (40) bewirkt.

2. Vortriebseinrichtung nach dem vorhergehenden Anspruch, wobei die zumindest eine Antriebseinheit (21; 31) angepasst ist, das erste Klemmbackenpaar (20) in entgegengesetzter Richtung zum zweiten Klemmbackenpaar (30) zu bewegen.

3. Vortriebseinrichtung nach einem der vorhergehenden Ansprüche, wobei
- die zumindest eine Antriebseinheit eine erste Antriebseinheit (21) und eine zweite Antriebseinheit (31) aufweist,
- die erste Antriebseinheit (21) ein erstes Schraubgetriebe (22) mit einer ersten Gewindespindel (23) und die zweite Antriebseinheit (31) ein zweites Schraubgetriebe (32) mit einer zweiten Gewindespindel (33) aufweisen,
- der ersten Gewindespindel (23) eine erste Spindelmutter (24) und der zweiten Gewindespindel (33) eine zweite Spindelmutter (34) zugeordnet sind, und
- die erste Spindelmutter (24) mit dem ersten Klemmbackenpaar (20) und die zweite Spindelmutter (34) mit dem zweiten Klemmbackenpaar (30) gekoppelt sind.

4. Vortriebseinrichtung nach dem vorhergehenden Anspruch, wobei die beiden Antriebseinheiten (21; 31) jeweils ein Antriebsmittel (M) aufweisen, das angepasst ist, die jeweilige Gewindespindel (23; 33) in eine Rotationsbewegung zu versetzen, derart, dass das erste Klemmbackenpaar (20) und das Klemmbackenpaar (30) mit der gleichen Geschwindigkeit in entgegengesetzte Richtungen bewegt werden.

5. Vortriebseinrichtung nach einem der Ansprüche 1 oder 2, wobei die zumindest eine Antriebseinheit (21; 31) ein Schraubgetriebe (22) mit einer Gewindespindel (23) aufweist, wobei
- die Gewindespindel (23) einen ersten Abschnitt (23a) und einen zweiten Abschnitt (23b) aufweist,
- dem ersten Abschnitt (23a) der Gewindespindel eine erste Spindelmutter (24) und dem zweiten Abschnitt (23b) der Gewindespindel eine zweite Spindelmutter (34) zugeordnet sind,
- die erste Spindelmutter (24) mit dem ersten Klemmbackenpaar (20) und die zweite Spindelmutter (34) mit dem zweiten Klemmbackenpaar (30) gekoppelt sind, und
- der erste Abschnitt (23a) der Gewindespindel ein Rechtsgewinde und der zweite Abschnitt (23b) der Gewindespindel ein Linksgewinde aufweisen, wobei das Rechtsgewinde und das Linksgewinde dieselbe Steigung aufweisen.

6. Vortriebseinrichtung nach dem vorhergehenden Anspruch, wobei die Antriebseinheit (21; 31) ein Antriebsmittel (M) aufweist, das angepasst ist, die Gewindespindel (23) in eine Rotationsbewegung zu versetzen.

7. Vortriebseinrichtung nach einem der vorhergehenden Ansprüche, wobei dem ersten und dem zweiten Klemmbackenpaar (20; 30) jeweils ein Stellmittel zugeordnet ist, das angepasst ist, die Klemmbacken (20a, 20b; 30a, 30b) des jeweiligen Klemmbackenpaares
- zu schließen, um den zwischen den Backen angeordneten Abschnitt des Schiebeaals (40) zwischen die Backen zu klemmen, und
- zu öffnen, um den zwischen den Backen angeordneten Abschnitt des Schiebeaals (40) freizugeben.

8. Vortriebseinrichtung nach dem vorhergehenden Anspruch, wobei die Stellmittel angepasst sind,
- die Klemmbacken (20a, 20b) des ersten Klemmbackenpaares (20) zu öffnen, wenn die Klemmbacken (30a, 30b) des zweiten Klemmbackenpaares (30) geschlossen werden, und/oder
- die Klemmbacken (30a, 30b) des zweiten Klemmbackenpaares (30) zu öffnen, wenn die Klemmbacken (20a, 20b) des ersten Klemmbackenpaares (20) geschlossen werden.

9. Vortriebseinrichtung nach einem der vorhergehenden Ansprüche, wobei zumindest eine Klemmbacke (20a, 20b; 30a, 30b) jedes Klemmbackenpaares (20; 30) an der dem Schiebeaal (40) zugewandten Seite bzw. Oberfläche eine längliche und beidseitig offene Aussparung (50) aufweist, in die der Schiebeaal (40) beim Schließen des jeweiligen Klemmbackenpaares in Eingriff gelangt.

10. Vortriebseinrichtung nach einem der vorhergehenden Ansprüche, wobei die Antriebseinheit (21; 31) ein Führungsmittel (70) aufweist, entlang der die Klemmbackenpaare (20; 30) bewegt werden, wobei das Führungsmittel (70) den Spindelmuttern (24; 34) zugeordnet ist und in Längsführungen der Spindelmuttern (24; 34) eingreift.

11. Vortriebseinrichtung nach einem der Ansprüche 1 oder 2, wobei
- die zumindest eine Antriebseinheit eine erste Antriebseinheit (21) und eine zweite Antriebseinheit (31) aufweist,
- die erste Antriebseinheit (21) ein erstes Zahnradgetriebe (25) mit einem ersten Zahnrad (26) und die zweite Antriebseinheit (31) ein zweites Zahnradgetriebe (35) mit einem zweiten Zahnrad (36) aufweisen,
- dem ersten Zahnrad (26) eine erste Zahnstange (27) und dem zweiten Zahnrad (36) eine zweite Zahnstange (37) zugeordnet sind, und
- die erste Zahnstange (27) mit dem ersten Klemmbackenpaar (20) und die zweite Zahnstange (37) mit dem zweiten Klemmbackenpaar (30) gekoppelt sind.

12. Vortriebseinrichtung nach dem vorhergehenden Anspruch, wobei die beiden Antriebseinheiten (21; 31) jeweils ein Antriebsmittel (M) aufweisen, das angepasst ist, das jeweilige Zahnrad (26; 36) in eine Rotationsbewegung zu versetzen, derart, dass das erste Klemmbackenpaar (20) und das zweite Klemmbackenpaar (30) über die jeweilige Zahnstange (27; 37) mit der gleichen Geschwindigkeit in entgegengesetzte Richtungen bewegt werden.

13. Vortriebseinrichtung nach einem der vorhergehenden Ansprüche, wobei die Antriebseinheiten (21; 31) mit einer Steuer- und Messeinrichtung (60) gekoppelt sind, wobei die Steuer- und Messeinrichtung (60) angepasst ist
- die Antriebseinheiten (21; 31) so zu steuern, dass das erste Klemmbackenpaar (20) in entgegengesetzter Richtung zum zweiten Klemmbackenpaar (30) bewegt wird, und
- die zurückgelegte Wegstrecke des Schiebeaals (40) anhand der Linearbewegungen der Klemmbackenpaare (30) zu ermitteln,
und/oder wobei der Steuer- und Messeinrichtung (60) eine Anzeigeeinrichtung zugeordnet ist, zum Anzeigen der zurückgelegten Wegstrecke des Schiebeaals (40).

14. Vortriebseinrichtung nach einem der vorhergehenden Ansprüche 4 bis 13, wobei die Antriebsmittel (M) einen Elektromotor umfassen.

## Claims

1. Propulsion device (10) for linearly moving a push rod (40) of a pipe inspection system, **characterized in that** the propulsion device comprises:
- a first clamping jaw pair (20) for receiving a first portion of the push rod (40) between the jaws (20a; 20b) of the first clamping jaw pair (20),
- a second clamping jaw pair (30) for receiving a second portion of the push rod (40) between the jaws (30a; 30b) of the second clamping jaw pair (30), and
- at least one drive unit (21; 31) which is coupled to the first clamping jaw pair (20) and to the second clamping jaw pair (30),
the at least one drive unit (21; 31) being adapted to move the clamping jaw pairs (20; 30) in a linear direction, movement of the clamping jaw pairs (20; 30) causing the linear movement of the push rod (40).

2. Propulsion device according to the preceding claim, wherein the at least one drive unit (21; 31) is adapted to move the first clamping jaw pair (20) in the opposite direction to the second clamping jaw pair (30).

3. Propulsion device according to either of the preceding claims, wherein
- the at least one drive unit comprises a first drive unit (21) and a second drive unit (31),
- the first drive unit (21) comprises a first helical gear (22) having a first threaded spindle (23) and the second drive unit (31) comprises a second helical gear (32) having a second threaded spindle (33),
- a first spindle nut (24) is associated with the first threaded spindle (23) and a second spindle nut (34) is associated with the second threaded spindle (33), and
- the first spindle nut (24) is coupled to the first clamping jaw pair (20) and the second spindle nut (34) is coupled to the second clamping jaw pair (30).

4. Propulsion device according to the preceding claim, wherein the two drive units (21; 31) each have a drive means (M) adapted to set the particular threaded spindle (23; 33) into a rotational movement, such that the first clamping jaw pair (20) and the clamping jaw pair (30) are moved in opposite directions at the same speed.

5. Propulsion device according to either claim 1 or claim 2, wherein the at least one drive unit (21; 31) comprises a helical gear (22) having a threaded spindle (23), wherein
- the threaded spindle (23) comprises a first portion (23a) and a second portion (23b),
- a first spindle nut (24) is associated with the first portion (23a) of the threaded spindle and a second spindle nut (34) is associated with the second portion (23b) of the threaded spindle,
- the first spindle nut (24) is coupled to the first clamping jaw pair (20) and the second spindle nut (34) is coupled to the second clamping jaw pair (30), and
- the first portion (23a) of the threaded spindle comprises a right-hand thread and the second portion (23b) of the threaded spindle comprises a left-hand thread, wherein the right-hand thread and the left-hand thread have the same pitch.

6. Propulsion device according to the preceding claim, wherein the drive unit (21; 31) has a drive means (M) adapted to set the threaded spindle (23) into a rotational movement.

7. Propulsion device according to any of the preceding claims, wherein an adjusting means is associated with each of the first and second clamping jaw pairs (20; 30), which adjusting means is adapted
- to close the clamping jaws (20a, 20b; 30a, 30b) of the particular clamping jaw pair, in order to clamp the portion, arranged between the jaws, of the push rod (40) between the jaws, and
- to open the clamping jaws of the particular clamping jaw pair, in order to release the portion of the push rod (40) arranged between the jaws.

8. Propulsion device according to the preceding claim, wherein the adjusting means are adapted
- to open the clamping jaws (20a, 20b) of the first clamping jaw pair (20) when the clamping jaws (30a, 30b) of the second clamping jaw pair (30) are closed, and/or
- to open the clamping jaws (30a, 30b) of the second clamping jaw pair (30) when the clamping jaws (20a, 20b) of the first clamping jaw pair (20) are closed.

9. Propulsion device according to any of the preceding claims, wherein at least one clamping jaw (20a, 20b; 30a, 30b) of each clamping jaw pair (20, 30) has, on the side or surface facing the push rod (40), an elongate recess (50) which is open on both sides and which the push rod (40) enters when the particular clamping jaw pair is closed.

10. Propulsion device according to any of the preceding claims, wherein the drive unit (21; 31) has a guide means (70) along which the clamping jaw pairs (20; 30) are moved, wherein the guide means (70) is associated with the spindle nuts (24; 34) and engages in longitudinal guides of the spindle nuts (24; 34).

11. Propulsion device according to either claim 1 or claim 2, wherein
- the at least one drive unit comprises a first drive unit (21) and a second drive unit (31),
- the first drive unit (21) comprises a first gear train (25) having a first gear (26) and the second drive unit (31) comprises a second gear train (35) having a second gear (36),
- a first gear rack (27) is associated with the first gear (26) and a second gear rack (37) is associated with the second gear (36), and
- the first gear rack (27) is coupled to the first clamping jaw pair (20) and the second gear rack (37) is coupled to the second clamping jaw pair (30).

12. Propulsion device according to the preceding claim, wherein the two drive units (21; 31) each have a drive means (M) adapted to set the particular gear (26; 36) into a rotational movement, such that the first clamping jaw pair (20) and the second clamping jaw pair (30) are moved in opposite directions at the same speed via the respective gear racks (27; 37).

13. Propulsion device according to any of the preceding claims, wherein the drive units (21; 31) are coupled to a control and measuring device (60), wherein the control and measuring device (60) is adapted
- to control the drive units (21; 31) such that the first clamping jaw pair (20) is moved in the opposite direction to the second clamping jaw pair (30), and
- to determine the distance traveled by the push rod (40) on the basis of the linear movements of the clamping jaw pairs (30),
and/or wherein a display device is associated with the control and measuring device (60) in order to display the distance traveled by the push rod (40).

14. Propulsion device according to any of the preceding claims 4 to 13, wherein the drive means (M) comprise an electric motor.

## Revendications

1. Dispositif de propulsion (10) pour le déplacement linéaire d'une tige coulissante (40) d'un système d'inspection de tuyaux, **caractérisé en ce que** le dispositif de propulsion comprend :
- une première paire de mâchoires de serrage (20) destinée à recevoir une première partie de la tige coulissante (40) entre les mâchoires (20a, 20b) de la première paire de mâchoires de serrage (20),
- une seconde paire de mâchoires de serrage (30) destinée à recevoir une seconde partie de la tige coulissante (40) entre les mâchoires (30a, 30b) de la seconde paire de mâchoires de serrage (30), et
- au moins une unité de propulsion (21 ; 31) qui est accouplée à la première paire de mâchoires de serrage (20) et à la seconde paire de mâchoires de serrage (30),
dans lequel l'au moins une unité de propulsion (21 ; 31) est adaptée pour déplacer les paires de mâchoires de serrage (20 ; 30) dans une direction linéaire, dans lequel le déplacement des paires de mâchoires de serrage (20 ; 30) entraîne le déplacement linéaire de la tige coulissante (40).

2. Dispositif de propulsion selon la revendication précédente, dans lequel l'au moins une unité de propulsion (21 ; 31) est adaptée pour déplacer la première paire de mâchoires de serrage (20) dans la direction opposée à la seconde paire de mâchoires de serrage (30).

3. Dispositif de propulsion selon l'une des revendications précédentes, dans lequel
- l'au moins une unité de propulsion comporte une première unité de propulsion (21) et une seconde unité de propulsion (31),
- la première unité de propulsion (21) comporte une première transmission à vis (22) dotée d'une première broche filetée (23) et la seconde unité de propulsion (31) comporte une seconde transmission à vis (32) dotée d'une seconde broche filetée (33),
- un premier écrou de broche (24) est associé à la première broche filetée (23) et un second écrou de broche (34) est associé à la seconde broche filetée (33), et
- le premier écrou de broche (24) est accouplé à la première paire de mâchoires de serrage (20) et le second écrou de broche (34) est accouplé à la seconde paire de mâchoires de serrage (30).

4. Dispositif de propulsion selon la revendication précédente, dans lequel les deux unités de propulsion (21 ; 31) comportent chacune un moyen de propulsion (M) adapté pour mettre chaque broche filetée (23 ; 33) dans un mouvement de rotation, de sorte que la première paire de mâchoires de serrage (20) et la paire de mâchoires de serrage (30) soient déplacées dans des directions opposées à la même vitesse.

5. Dispositif de propulsion selon l'une des revendications 1 ou 2, dans lequel l'au moins une unité de propulsion (21, 31) comporte une transmission à vis (22) dotée d'une broche filetée (23), dans lequel
- la broche filetée (23) comporte une première section (23a) et une seconde section (23b),
- un premier écrou de broche (24) est associé à la première section (23a) de la broche filetée, et un second écrou de broche (34) est associé à la seconde section (23b) de la broche filetée,
- le premier écrou de broche (24) est accouplé à la première paire de mâchoires de serrage (20) et le second écrou de broche (34) est accouplé à la seconde paire de mâchoires de serrage (30), et
- la première section (23a) de la broche filetée comporte un filetage à droite et la seconde section (23b) de la broche filetée comporte un filetage à gauche, dans lequel le filetage à droite et le filetage à gauche ont le même pas.

6. Dispositif de propulsion selon la revendication précédente, dans lequel l'unité de propulsion (21, 31) comporte un moyen d'entraînement (M) qui est adapté pour mettre la broche filetée (23) dans un mouvement de rotation.

7. Dispositif de propulsion selon l'une des revendications précédentes, dans lequel les première et seconde paires de mâchoires de serrage (20 ; 30) sont associées chacune à un moyen de réglage adapté, lequel moyen de réglage est adapté pour
- fermer les mâchoires de serrage (20a, 20b ; 30a, 30b) de chaque paire de mâchoires, afin de serrer la section de la tige coulissante (40) disposée entre les mâchoires entre les mâchoires, et
- ouvrir les mâchoires de serrage (20a, 20b ; 30a, 30b) de chaque paire de mâchoires, afin de libérer la section de la tige coulissante (40) disposée entre les mâchoires.

8. Dispositif de propulsion selon la revendication précédente, dans lequel les moyens de réglage sont adaptés pour
- ouvrir les mâchoires de serrage (20a, 20b) de la première paire de mâchoires de serrage (20) lorsque les mâchoires de serrage (30a, 30b) de la seconde paire de mâchoires de serrage (30) sont fermées, et/ou pour
- ouvrir les mâchoires de serrage (30a, 30b) de la seconde paire de mâchoires de serrage (30) lorsque les mâchoires (20a, 20b) de la première paire de mâchoires de serrage (20) sont fermées.

9. Dispositif de propulsion selon l'une des revendications précédentes, dans lequel au moins une mâchoire de serrage (20a, 20b, 30a, 30b) de chaque paire de mâchoires de serrage (20, 30) comporte, sur le côté ou la surface orienté(e) vers la tige coulissante (40), une encoche (50) allongée et ouverte des deux côtés, et dans lequel la tige coulissante (40) vient en prise lorsque chaque paire de mâchoires de serrage est fermée.

10. Dispositif de propulsion selon l'une des revendications précédentes, dans lequel l'unité de propulsion (21, 31) comporte un moyen de guidage (70) le long duquel les paires de mâchoires (20, 30) sont déplacées, dans lequel le moyen de guidage (70) est associé écrous de broche (24, 34) et vient en prise dans les guidages longitudinaux des écrous de broche (24, 34).

11. Dispositif de propulsion selon l'une des revendications 1 ou 2, dans lequel
- l'au moins une unité de propulsion comporte une première unité de propulsion (21) et une seconde unité de propulsion (31),
- la première unité d'entraînement (21) comporte une première transmission à engrenage (25) dotée d'une première roue dentée (26) et la seconde unité d'entraînement (31) comporte une seconde transmission à engrenage (35) dotée d'un second engrenage (36),
- une première crémaillère (27) est associée à la première roue dentée (26) et une seconde crémaillère (37) est associée à la seconde roue dentée (36), et
- la première crémaillère (27) est accouplée à la première paire de mâchoires de serrage (20) et la seconde crémaillère (37) est accouplée à la seconde paire de mâchoires de serrage (30).

12. Dispositif de propulsion selon la revendication précédente, dans lequel les deux unités de propulsion (21 ; 31) comportent chacune un moyen de propulsion (M) adapté pour mettre chaque roue dentée (26 ; 36) dans un mouvement de rotation, de sorte que la première paire de mâchoires de serrage (20) et la seconde paire de mâchoires de serrage (30) soient déplacées dans des directions opposées à la même vitesse par l'intermédiaire de chaque crémaillère (27 ; 37).

13. Dispositif de propulsion selon l'une des revendications précédentes, dans lequel les unités de propulsion (21, 31) sont accouplées à un dispositif de commande et de mesure (60), dans lequel le dispositif de commande et de mesure (60) est adapté pour
- commander les unités de propulsion (21 ; 31) de telle manière que la première paire de mâchoires de serrage (20) soit déplacée dans la direction opposé à la seconde paire de mâchoires de serrage (30), et pour
- déterminer la distance parcourue par la tige coulissante (40) sur la base des mouvements linéaires des paires de mâchoires de serrage (30),
et/ou dans lequel le dispositif de commande et de mesure (60) est associé à un dispositif d'affichage destiné à afficher la distance parcourue par la tige coulissante (40).

14. Dispositif de propulsion selon l'une des revendications précédentes 4 à 13, dans lequel les moyens d'entraînement (M) comprennent un moteur électrique.
